# EUROPÄISCHE PATENTANMELDUNG

(11) **EP 1 044 772 A2**
(43) Veröffentlichungstag der Anmeldung: **18.10.2000**
(21) Anmeldenummer: 00106022.7
(22) Anmeldetag: 28.03.2000
(51) Int. Cl.: B27D 5/00

(54) **Vorrichtung zum Bearbeiten von Kanten eines plattenförmigen Werkstückes mit mehreren Spanwerkzeugen**

(30) Priorität: 07.04.1999 DE 19915672
(71) Anmelder: HOMAG MASCHINENBAU AG, D-72296 Schopfloch (DE)
(72) Erfinder: Kalmbach, Kurt, 72275 Alpirsbach (DE); Kalmbach, Wilhelm, 72296 Schopfloch (DE); Rathgeber, Peter, 72280 Dornstetten (DE)
(74) Vertreter: HOFFMANN - EITLE

(57) **Zusammenfassung**

Die Erfindung betrifft eine Vorrichtung zum Bearbeiten von Kanten eines plattenförmigen Werkstückes. Ein derartiges Werkstück (12) besteht insbesondere aus Holz, holzähnlichen Werkstoffen oder Kunststoffen und weist insbesondere eine separate, an die Platten angeleimte Kante auf, die mit den jeweiligen Oberflächen des Werkstücks bündig zu fräsen ist. Die erfindungsgemäße Vorrichtung umfasst ein erstes abtragendes Spanwerkzeug (1), das einen Werkzeug-Basisdurchmesser aufweist. An der Vorrichtung ist eine dem abtragenden Werkzeug (1) zugeordnete Tasteinrichtung (10) zur Führung der Vorrichtung am Werkstück (12)vorhanden. Ferner ist zumindest ein weiteres abtragendes Spannwerkzeug (3) vorhanden, das den gleichen Werkzeug-Basisdurchmesser besitzt, wie das erste abtragende Werkzeug (1), mit dem aber eine andere Werkzeugbearbeitung durchgeführt wird. Dieses zumindest eine weitere Werkzeug (3) ist gegenüber dem ersten abtragenden Werkzeug (1) von einer Ruhestellung, in der es nicht mit dem Werkstück (12) in Eingriff steht, in eine Arbeitsstellung bewegbar, in der es mit dem Werkstück in Eingriff gelangt und in der die beiden abtragenden Werkzeuge so zueinander angeordnet sind, dass die beiden Werkzeug-Basisdurchmesser zur Tasteinrichtung die gleiche Lageposition einnehmen.

## Beschreibung

### Technisches Gebiet

Die Erfindung betrifft eine Vorrichtung zum Bearbeiten von Kanten eines plattenförmigen Werkstückes, insbesondere einer aus Holz, holzähnlichen Werkstoffen oder Kunststoffen bestehenden Platte, an dem insbesondere eine oder mehrere separate Kanten angeleimt sind. Insbesondere betrifft die Erfindung eine Vorrichtung der genannten Art, die in sogenannten Durchlaufbearbeitungsmaschinen (insbesondere Kantenanleimmaschine) eingesetzt wird, in denen das zu bearbeitende Werkstück mit im wesentlichen konstanter Geschwindigkeit an verschiedenen, hintereinander angeordneten Bearbeitungseinrichtungen vorbeigeführt wird, um an dem Werkstück unterschiedliche Bearbeitungsschritte durchzuführen, wie beispielsweise Formfräsen der Werkstückkante (Anfasen, Radiusfräsen), Schleifen oder Finishen (z.B. Abziehen mit einer Ziehklinge).

Die Erfindung kann aber auch als Einwechselaggregat ausgestaltet sein, das in die Hauptspindel eines Bearbeitungszentrums einwechselbar ist. Unter Bearbeitungszentrum ist hier eine Bearbeitungsmaschine zu verstehen, bei der das zu bearbeitende Werkstück fest aufgespannt ist und die Bearbeitungswerkzeuge (verschiedenste Aggregate) am Werkstück programmgesteuert entlanggeführt werden.

### Stand der Technik

Mit einer Spanvorrichtung, insbesondere einem Fräswerkzeug, der eingangs genannten Art werden an den plattenförmigen Werkstücken und/oder den Kanten verschiedenste Bearbeitungsvorgänge durchgeführt. Beispielsweise kann hiermit ein irgendwie geartetes Profil gefräst werden oder eine angeleimte Kante umlaufend mit der Platte bündig gefräst werden. Darüber hinaus ist auch ein Abziehen mit einer Ziehklinge möglich.

So ist es hinlänglich bekannt, im Durchlaufverfahren eine separate Kante an die Schmalseite eines plattenförmigen Werkstücks anzuleimen. Diese angeleimte Kante muss einerseits an ihrer Ober- und Unterseite und auch der vorderen und hinteren Stirnseite des Werkstücks zur Werkstückfläche bündig gefräst werden. Dabei sind auch verschiedenste Profile anzubringen.

Bei den bekannten Durchlaufmaschinen sind aufgrund der großen Toleranzen der Werkstücke die jeweiligen Spanwerkzeuge über eine Tasteinrichtung geführt. So ist beispielsweise in der DE 37 32 810 C1 ein Fräsaggregat gezeigt, das zur Bearbeitung der Kantenränder von fortlaufend bewegten plattenförmigen Werkstücken mittels einer auf den Kantenrand einwirkenden Werkzeuganordnung dient. Die Lage der Werkzeuganordnung zum Kantenrand wird hier durch zwei Tastelemente gesteuert. Das eine Tastelement ist als Tastrolle ausgebildet und rollt auf der Oberseite des Werkstücks ab. Die Werkzeuganordnung umfasst hier zwei oder mehr nebeneinander angeordnete Fräser. Dadurch ergibt sich eine sogenannte "tannenbaumartige" Fräsersatzanordnung, welche die Anordnungsmöglichkeiten im räumlich beengten Kantenrandbereich erhöht und ein sehr nahes heranlegen der wirksamen Tastfläche des Tastelementes an den Kantenrand ermöglicht. Die Fräser sind unterschiedlich ausgebildet, so dass durch Verschieben des gesamten Werkzeugsatzes der gewünschte Fräser mit dem Werkstück in Eingriff gelangt.

Die zuvor genannten Durchlaufmaschinen und die jeweiligen Bearbeitungswerkzeuge sind mit dem Nachteil behaftet, dass für jeden Arbeitsgang jeweils eine eigene Bearbeitungsstation einzurichten ist. Darüber hinaus muss bei einem Werkzeugwechsel (Fräserwechsel) das Werkzeug und das zugehörige Tastelement aufwendig ausgetauscht werden.

Zusammenfassend ist festzustellen, dass nach dem Stand der Technik verschiedenste Fräsbearbeitungen mit unterschiedlichen Werkzeugen durchgeführt werden, wobei bei einem Werkzeugwechsel das Werkzeug zusammen mit der zugehörigen Tasteinrichtung gewechselt werden muss, oder die gesamte Vorrichtung ausgetauscht werden muss. Das Profilwerkzeug muss zusammen mit der Tasteinrichtung gewechselt werden, da das Werkzeug abgestimmt auf den Werkzeug-Basisdurchmesser umlaufend am Werkstück zu führen ist. Hierzu sei noch angemerkt, dass im Sinne der vorliegenden Anmeldung unter dem Begriff "Werkzeug-Basisdurchmesser" derjenige Durchmesser des Werkzeugs zu verstehen ist, der für die Programmierung der Steuerung der Bearbeitungsvorrichtung in der Durchlaufmaschine oder des Bearbeitungszentrums als Referenzdurchmesser des Werkzeuges angesetzt wird und in Kombination mit der zugehörigen Tasteinrichtung zu sehen ist, da hierdurch auch die Lage des Werkzeugs zur Tasteinrichtung festgelegt wird. Durch den Werkzeug-Basisdurchmesser wird also der für eine präzise Bearbeitung des Werkstücks wesentliche Abstand zwischen dem Werkzeug und der zugehörigen Tasteinrichtung festgelegt. Wie bereits erwähnt, muss, da die Werkstückabmessungen größeren Toleranzen unterliegen, aber die angeleimte Kante mit der Werkstückoberseite äußerst genau bündig verlaufen soll, das Werkzeug in Abhängigkeit von der Werkstückfläche geführt werden, wozu die Tasteinrichtung dient. Da nun der Abstand zwischen der Tasteinrichtung und dem Werkzeug durch dessen Basisdurchmesser festgelegt ist, kann trotz der größeren Toleranzen der Platte eine präzise Bearbeitung des Werkstücks erfolgen.

Allgemein ist zwar beispielsweise aus der DE 196 36 127 A1 ein Werkzeug zur spanabtragenden Bearbeitung bekannt, das aus mindestens zwei gegeneinander verlagerbaren Teilwerkzeugen besteht, so dass hier intern ein Werkzeugwechsel stattfinden kann, jedoch ist durch die spezielle Ausgestaltung als Bohrungswerkzeug kein Tastelement erforderlich. Auch die DE 196 49 568 A1 offenbart lediglich zwei gegeneinander verlagerbare Bohrwerkzeuge. Auch hier muss keine Führung des gesamten, die Werkzeuge tragenden Gerätes bzw. Aggregates mittels eines Tastelementes an dem Werkstück vorgenommen werden. Das gleiche gilt für ein Bohr- Fräswerkzeug, wie es in der DE 38 188 gezeigt ist. Diese Bohr- und Fräswerkzeug umfasst einen Bohrer und einen Fräser zum gleichzeitigen Bearbeiten zweier in verschiedener Höhen, aber im gleichen Zentrum liegender Stirnflächen. Hiermit kann also nicht der gleiche Werkstückabschnitt bearbeitet werden. Mehrere, in einem Aggregat untergebrachte Werkzeuge finden sich auch in der DE 375 684, DE 1 178 672, US 2,818,753, US 2,826,104, US 2,826,803, US 4,580,933, DE 47 09 472 U1, DE 77 29 079 U1, DE 90 11 120 U1. All die hierin gezeigten, als Bohrwerkzeuge ausgestalteten Einheiten sind aber nicht getastet entlang einer Werkstückkontur zu führen.

Aus der DE 23 48 731 A1 ist ein Kantenbearbeitungswerkzeug bekannt, das zwei Einzelfräser umfasst, wovon zumindest einer verschiebbar auf einer Spindel gelagert ist. Bei diesem bekannten Kantenbearbeitungswerkzeug sind die Fräser verschiebbar gelagert, um zu verhindern, dass immer die gleichen Werkzeugabschnitte mit dem zu bearbeitenden Werkstück in Eingriff gelangen. Durch einen Versatz eines Werkzeuges soll ein anderer Werkzeugabschnitt des verschiebbar gelagerten Einzelwerkzeuges zur weiterhin unveränderten Werkstückbearbeitung mit dem Werkstück in Eingriff gelangen können, damit ein gleichmäßigerer Verschleiß des Einzelwerkzeuges erreicht werden kann. Bei dieser bekannten Anordnung von Einzelfräsern ist eine Tasteinrichtung weder notwendig noch zweckdienlich, weil hier das Werkstück am ortsfesten Werkzeug vorbeigeführt wird. Aus der DE 25 41 259 A1 ist ebenfalls eine Fräseinrichtung mit zwei zusammenwirkenden Fräswerkzeugen bekannt, wovon ein Fräswerkzeug axial verschiebbar ist. Wiederum soll eine gleichmäßige Abnützung des Fräswerkzeuges erreicht werden, indem das zumindest eine Fräswerkzeugteil gegenüber dem zu bearbeitenden Werkstück verschieblich ist.

In der DE-PS 956 807 ist ein Kantenbearbeitungsgerät für furnierbedeckte Werkstücke gezeigt, bei dem mehrere Taster für mehrere Spanwerkzeuge vorhanden sind. Hier sind aber für jedes Spanwerkzeug eigene Taster erforderlich, wie es auch im zuvor genannten Stand der Technik der Fall ist.

### Darstellung der Erfindung

Das der Erfindung zugrunde liegende technische Problem besteht darin, eine getastete - also durch eine Tasteinrichtung geführte - Vorrichtung zum Bearbeiten von Kanten eines Werkstückes bereitzustellen, mit der ohne aufwendige Einstellarbeiten verschiedene spanende Bearbeitungsvorgänge ausgeführt werden können.

Dieses der Erfindung zugrunde liegende technische Problem wird durch eine Vorrichtung mit den Merkmalen des Anspruchs 1 gelöst. Eine solche Vorrichtung umfasst ein erstes Spanwerkzeug, das einen Werkzeug-Basisdurchmesser aufweist. Diesem Spanwerkzeug ist eine Tasteinrichtung zur Führung der Vorrichtung am Werkstück zugeordnet. Die erfindungsgemäße Vorrichtung umfasst ferner zumindest ein weiteres Spanwerkzeug, das den gleichen Werkzeug-Basisdurchmesser besitzt wie das erste Spanwerkzeug. Dieses weitere Spanwerkzeug ist gegenüber dem ersten Spanwerkzeug von einer Ruhestellung, in der es nicht mit dem Werkstück in Eingriff steht, in eine Arbeitsstellung bewegbar, in der es mit dem Werkstück in Eingriff gelangt und in der die beiden Spanwerkzeuge so zueinander angeordnet sind, dass die beiden Werkzeug-Basisdurchmesser zur Tasteinrichtung die gleiche Lageposition einnehmen. Eine Abweichung der Lageposition um wenige zehntel Millimeter kann erwünscht sein, damit immer nur eines der Spanwerkzeuge mit dem Werkstück in Eingriff ist, d.h. bei in die Arbeitsstellung bewegten weiterem Spanwerkzeug das feststehende Spanwerkzeug nicht "mitschleift".

Der Erfindung liegt der Gedanke zugrunde, die bisher als notwendig erachtete feste Kombination von Spanwerkzeug und Tasteinrichtung dahingehend zu erweitern, dass nun mehrere Spanwerkzeuge in spezieller Weise gegeneinander bewegbar sind, so dass nur eine einzige Tasteinrichtung für mehrere, unterschiedlich geartete Spanwerkzeuge einsetzbar ist. Durch diese spezielle Ausgestaltung der Spanwerkzeuge und deren besondere Verschiebbarkeit gegenüber der Tasteinrichtung ist es erstmals möglich, verschiedene Fräsvorgänge an einer Kante eines plattenförmigen Werkstückes vorzunehmen, ohne das Werkzeug in der Werkzeughalterung, d.h. der Vorrichtung zur Bearbeitung des Werkstücks, aufwendig auszutauschen. Es ist nunmehr nur noch notwendig, die im gemeinsamen Aggregat gehaltenen Werkzeuge außer Eingriff bzw. in Eingriff zu bringen, aber dies in spezieller Weise vorzunehmen, nämlich so, dass die Tasteinrichtung für alle Spanwerkzeuge einsetzbar ist. Dies ist dadurch gewährleistet, dass alle Spanwerkzeuge den gleichen Werkzeug-Basisdurchmesser aufweisen und entsprechend koordiniert verfahren werden, so dass der Werkzeug-Basisdurchmesser der einzelnen Werkzeuge gegenüber der Tasteinrichtung immer in der gleichen Stellung zum Liegen kommt.

Die erfindungsgemäße Vorrichtung ist äußerst vorteilhaft, wenn sowohl das erste Spanwerkzeug wie auch das zumindest eine weitere Spanwerkzeug jeweils Fräser sind. Bei einer derartigen Werkzeugausbildung ist es in äußerst einfacher Weise möglich, beispielsweise verschiedene Radien zu fräsen oder auch ein Spanwerkzeug als Geradfräser auszubilden.

Indem das erste Spanwerkzeug und das zumindest eine weitere Spanwerkzeug auf einem gemeinsamen Aufnahmedorn sitzen, ist nur ein gemeinsamer Antrieb für beide Spanwerkzeuge notwendig.

Vorteilhafterweise ist das erste Spanwerkzeug auf dem Aufnahmedorn fest angeordnet und das zumindest eine weitere Spanwerkzeug auf diesem Aufnahmedorn bewegbar angeordnet. Dadurch ist eine sehr einfache technische Ausgestaltung der Vorrichtung möglich. Indem die verschiedenen Fräswerkzeuge unterschiedliche Radien aufweisende Schneiden haben, ist die Bearbeitung des Werkstücks mit dem hineinbewegten weiteren Fräser möglich.

Das Ein- und Ausfahren des zumindest einen weiteren Spanwerkzeuges von der Ruhestellung in die Arbeitsstellung und umgekehrt erfolgt vorteilhafterweise über eine pneumatische oder hydraulische Verstellung. Dadurch wird das zumindest eine weitere Spanwerkzeug längs des Aufnahmedorns verschoben. Es ist aber auch selbstverständlich möglich, eine elektromotorisch Variante für die Verstellung zu wählen. Durch die Verschiebbarkeit auf dem gemeinsamen Aufnahmedorn aller Spanwerkzeuge ist die Führung der Werkzeuge äußerst genau.

Bei einer bevorzugten Ausführungsform ist das zumindest eine weitere Spanwerkzeug mittels einer Kupplungsgabel auf dem Aufnahmedorn verschiebbar. Hierbei ist die Kupplungsgabel beabstandet von der Längsachse des Aufnahmedorns drehbar gelagert und mittels eines Verstellzylinders, vorteilhafterweise eines pneumatischen Zylinders, verdrehbar. Diese Ausgestaltung ist mechanisch äußerst robust und unkompliziert, jedoch auch äußerst zuverlässig. Es ist ja zu berücksichtigen, dass in diesem Bereich bei einer zerspanenden Bearbeitung viele Späne anfallen und hierdurch die einzelnen Komponenten eventuell einer starken Verschmutzung unterliegen. Die Verstellung mit Kupplungsgabel ist zwar etwas aufwendig, hat aber den Vorteil, dass sie auch bei sich drehendem Aufnahmedorn betätigbar ist.

Alternativ hierzu ist eine Schraubverstellung denkbar, die weniger Bauraum einnimmt und technisch weniger aufwendig ist, allerdings nur im Stillstand zu betätigen ist.

Damit das bewegbare Werkzeug in der Arbeitsstellung wie auch der Ruhestellung fest fixiert werden kann, sind verschiedenste Spanneinrichtungen, wie sie im Stand der Technik bekannt sind, einsetzbar. Es wird aber eine sog. Hydrospannung bevorzugt, bei der der Aufnahmedorn in seinem Durchmesser veränderbar ist, so dass bei verringertem Durchmesser das Spanwerkzeug bewegt werden kann, bei vergrößertem Durchmesser das Spanwerkzeug auf dem Aufnahmedorn aber festsitzt. Vorteilhafterweise ist für die Veränderung des Aufnahmedorndurchmessers der Aufnahmedorn selbst innen hohl. Über ein druckbeaufschlagbares Medium (Hydrauliköl) in diesem Hohlraum wird dann der Durchmesser des Aufnahmedorns veränderbar. Das heißt, indem der Druck im Hohlraum des Aufnahmedorns verändert wird, wird auch entsprechend der Durchmesser des Aufnahmedorns verändert.

Es ist technisch äußerst einfach und unkompliziert, wenn das erste Spanwerkzeug aus einzelnen, auf einem Kreis beabstandet angeordneten Schneiden besteht, die an einem gemeinsamen Halter befestigt sind. Das zumindest eine weitere Spanwerkzeug besteht ebenfalls aus einzelnen, auf einem Kreis beabstandeten Schneiden, die gegenüber den Schneiden des ersten Spanwerkzeuges derart versetzt sind, dass bei Bewegen des zweiten Spanwerkzeuges in die Arbeitsstellung dessen Schneiden zwischen den Schneiden des ersten Spanwerkzeuges zu liegen kommen. Dadurch ist es entsprechend der gewählten Schneidengeometrie der einzelnen Spanwerkzeuge möglich, die ein- oder andere Fräsbearbeitung durchzuführen.

Die erfindungsgemäße Vorrichtung ist mittels verschiedener bekannter Einrichtungen tastend am Werkstück entlangzuführen. Einfach und sehr genau ist aber eine Einrichtung, bei der als Tasteinrichtung eine Tastrolle vorhanden ist, die am vorderen Ende des Aufnahmedorns drehbar gelagert ist. Selbstverständlich ist aber auch beispielsweise eine Gleitkufe oder ein Gleitstreifen für den gleichen Einsatzzweck verwendbar.

### Kurze Beschreibung der Zeichnungen

Im Folgenden werden zur weiteren Erläuterung und zum besseren Verständnis mehrere Ausführungsbeispiele der Erfindung unter Bezugnahme auf die beigefügten Zeichnungen näher beschrieben und erläutert. Es zeigt:
- Fig. 1: eine schematische Draufsicht auf eine erfindungsgemäße Fräsvorrichtung mit integriertem Werkzeugwechsler,
- Fig. 2: eine Vorderansicht auf die zwei Fräswerkzeuge, die auf einem gemeinsamen Aufnahmedorn der erfindungsgemäßen Vorrichtung nach der Fig. 1 sitzen,
- Fig. 3: eine Vorderansicht auf ein Detail gemäß der Fig. 1, nämlich der Kupplungsgabel zur Durchführung der Verstellung des bewegbaren Fräswerkzeuges,
- Fig.4: eine schematische Darstellung zur Erläuterung des Werkzeug-Basisdurchmessers,
- Fig.5: ein schematischer Längsschnitt einer weiteren Ausführungsform einer erfindungsgemäßen Vorrichtung mit einer anderen Verstelleinrichtung zum Einbringen eines zweiten Fräswerkzeuges und,
- Fig.6: eine vergrößerte Teilansicht zweier Frässchneiden, wie sie in der Fig. 5 im Werkzeughalter gezeigt sind.

### Beschreibung bevorzugter Ausführungsbeispiele der Erfindung

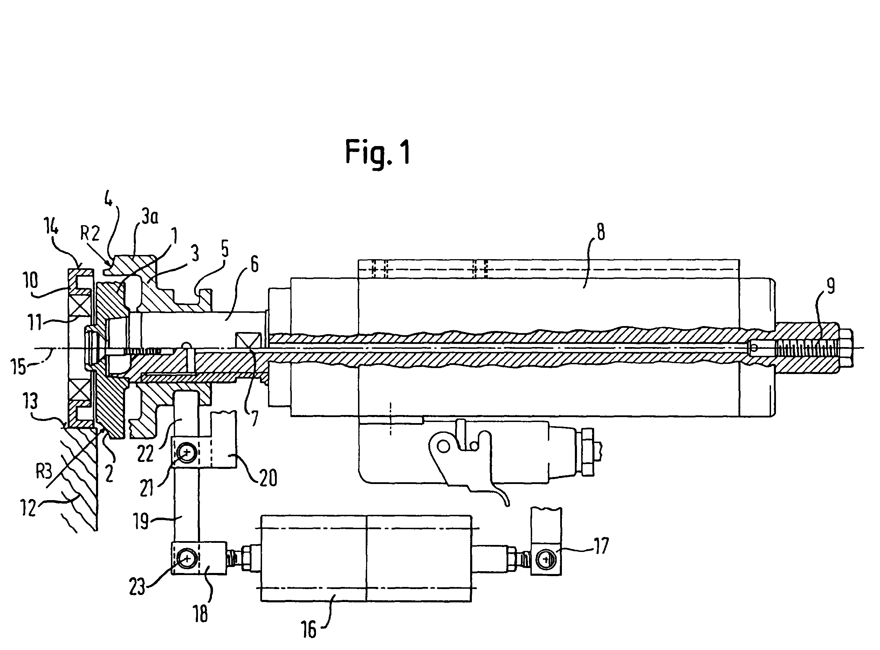

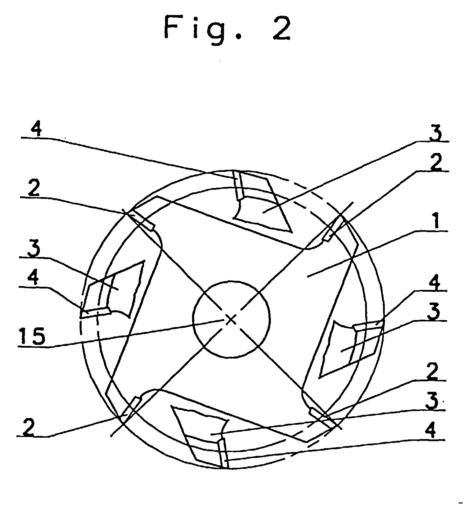

Das in der Fig. 1 gezeigte erfindungsgemäße Fräsaggregat 1 umfasst grundsätzlich einen ersten Fräser 1 mit mehreren, beabstandet voneinander kreisförmig verteilten Schneiden 2, wie es insbesondere aus der Darstellung gemäß der Fig. 2 ersichtlich ist. Diese Schneiden 2 des ersten Fräsers 1 haben hier einen Radius von 3 mm, um eine Kante eines Werkstückes 12 mit einem Radius von 3 mm zu fräsen. Der Fräser 1 ist am Ende eines Aufnahmedorns 6 des Aggregates fest fixiert. Auf dem gleichen Aufnahmedorn 6 sitzt ein weiterer Fräser 3. Wie insbesondere aus der Fig. 2 ersichtlich ist, setzt sich auch dieser Fräser 3 aus mehreren Schneiden 4 zusammen, die gleichmäßig voneinander beabstandet auf einem Kreis angeordnet sind. Die Schneiden 4 sind insbesondere an vorkragenden Armen 3a gehalten, so dass sie zwischen den Schneiden 2 des ersten Fräsers 1 einrückbar sind. Insgesamt ist der zweite Fräser 3 auf dem Aufnahmedorn 6 verschieblich gelagert.

Wie aus der Darstellung gemäß der Fig. 1 ersichtlich ist, ist am vordersten Ende des Aufnahmedorns 6 eine Tastrolle 10 über ein Lager 11 drehbar um die Drehachse 15, die auch die Drehachse des Aufnahmedorns 6 darstellt, gelagert. Die Tastrolle 10 weist umfangsseitig eine Tastfläche 14 auf, mit der das gesamte Fräsaggregat entlang einer Seite 13 des Werkstücks 12 geführt wird.

Der Aufnahmedorn 6 ist innen mit einem Kanal 7 ausgebildet, der über ein druckbeaufschlagtes Medium, hier Hydrauliköl, in seinem Durchmesser geringfügig veränderbar ist. Der Kanal 7 erstreckt sich durch eine Halterung 8 und ist über eine Schraube 9 am gegenüberliegenden Ende verschlossen. Durch Verstellung der Schraube 9 ist der Druck im Kanal 7 veränderbar und damit auch der Durchmesser des Aufnahmedorns 6. Es ist zwar hier nicht dargestellt, aber die Schraube 9 ist motorisch und somit programmgesteuert verstellbar.

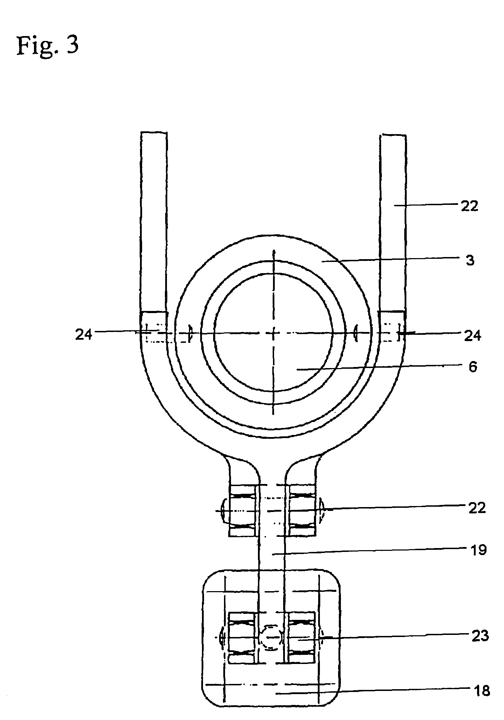

Nachfolgend wird nun der Verstellmechanismus für den zweiten Fräser 3 anhand der Fig. 1 und 3 erläutert. Wie bereits zuvor beschrieben, sitzt der bewegliche Fräskopf 3 auf dem Aufnahmedorn 6 verschiebbar. Er weist eine Aufkragung 5 an dem den Schneiden gegenüberliegenden Stirnende auf, in die eine Kupplungsgabel 22 eingreift. Die Kupplungsgabel ist über Stifte 24 in diese Aufkragung 5 eingreifend. Die Kupplungsgabel 22 endet in einem Hebelarm 22, der in einer festen Halterung 20 mittels eines Bolzens 21 drehbar gelagert ist. Das dem Fräswerkzeug beabstandete Ende 19 des Hebelarms 22 ist über ein Verbindungsstück 18 drehbar mit einem Pneumatikzylinder 16 verbunden, der wiederum in einer festen Halterung 17 gelagert ist.

Durch Veränderung der Länge des Pneumatikkolbens 16 verschwenkt sich die Kupplungsgabel 22 in der Fig. 1 nach rechts oder nach links. Je nach der Längenänderung des Pneumatikzylinders 16 kann nun somit über die Kupplungsgabel 22 der zweite Fräser 3 auf dem Aufnahmedorn 6 von einer Ruhestellung, in der er mit dem Werkstück nicht in Eingriff ist, in eine Arbeitsstellung verschwenkt werden, in der er mit dem Werkstück 12 in Eingriff gelangt. Diese Verstellung in die Arbeitsstellung erfolgt aber derart, dass die beiden Werkzeug-Basisdurchmesser WZBD der Schneiden 2 des ersten Fräsers 1 wie auch der Schneiden 4 des zweiten Fräsers 3 den gleichen Basisdurchmesser aufweisen und damit die Tastrolle 10 weiterhin auch bei in Arbeitsstellung des zweiten Fräswerkzeuges 3 verwendet werden kann.

Mit dem zuvor beschriebenen Fräsaggregat kann nun die gesamte Kontur eines plattenförmigen Werkstückes abgefahren werden und an verschiedenen Seite mit unterschiedlichen Radien etc. profiliert werden, ohne dass die Tastrolle 10 gewechselt werden muss oder ein Austausch eines Werkzeugs erfolgen muss.

Es ist lediglich notwendig, bei einem in Sekundenschnelle durchführbaren Werkzeugwechsel den Pneumatikzylinder 16 zu betätigen und gleichzeitig die Schraube 9 derart zu verstellen, dass der Druck im Kanal 7 im Aufnahmedorn 6 abnimmt, so dass das über die Kupplungsgabel 22 und dem Pneumatikzylinder 16 verstellbare bewegliche Fräswerkzeug 3 von der Ruhestellung in die Arbeitsstellung verschwenkt werden kann. Sobald die Arbeitsstellung erreicht wird, wird der Druck über die Schraube 9 im Arbeitskanal 7 wieder erhöht und das Fräswerkzeug auf dem Aufnahmedorn fixiert. All dies kann bei laufendem Betrieb erfolgen, also auch bei sich drehendem Aufnahmedorn 6.

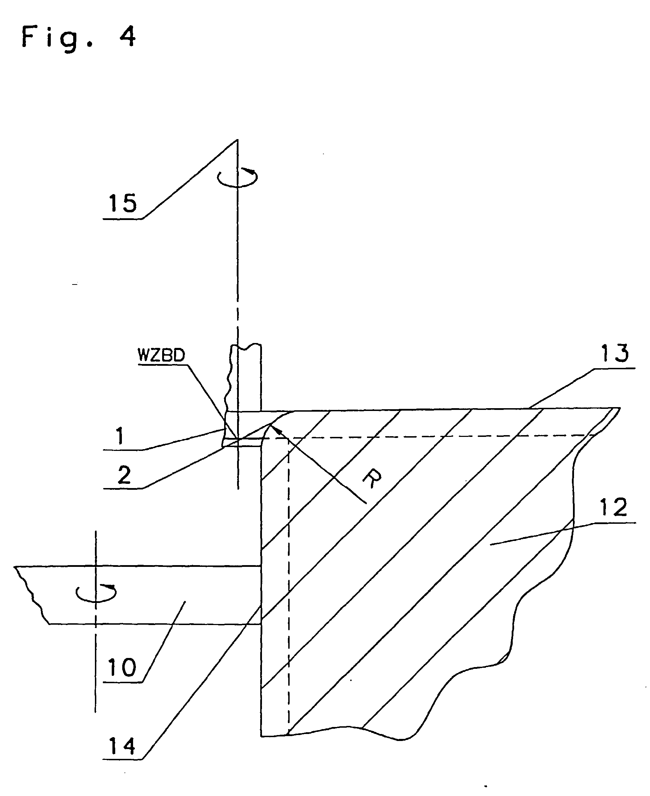

Unter Bezugnahme auf die Fig.4 wird der Werkzeug-Basisdurchmesser (WZBD) erläutert. Der Fräser 1 mit den Schneiden 2 dreht sich um die Drehachse 15. Die Schneide 2 weist den Radius R 3 mm auf (hier übertrieben dargestellt), um an der Werkstückkante einen Radius mit 3 mm zu fräsen. Die Tastrolle rollt mit ihrer Umfangsfläche 14 auf der Oberseite 13 des Werkstücks 12 ab.

Der Werkzeug-Basisdurchmesser WZBD ist ein virtueller Bezugsdurchmesser der Fräserschneide 2, der für jedes Werkzeug einmal festgelegt wird. Durch den Werkzeug-Basisdurchmesser WZBD wird aber nun auch der Abstand H zwischen dem Werkzeug-Basisdurchmesser WZBD und der Umfangsfläche 14 der Tastrolle festgelegt. Da diese geometrische Lage zwischen den Schneiden 2 und der Tastrolle 10 über den (virtuellen) Werkzeug-Basisdurchmesser WZBD festzulegen ist, kann damit präzise die Schneide für beispielsweise ein Bündigfräsen an der Oberseite 13 des Werkstücks 12 angeordnet werden, indem der Abstand H in der erforderlichen Weise verändert wird. So wird bei einer Vergrößerung des Abstands H bei gleicher Schneide 2 an der Oberseite 13 des Werkstücks 12 eine Abstufung erzielt, die dann zur Werkstückschmalseite hin in einen Radius übergeht.

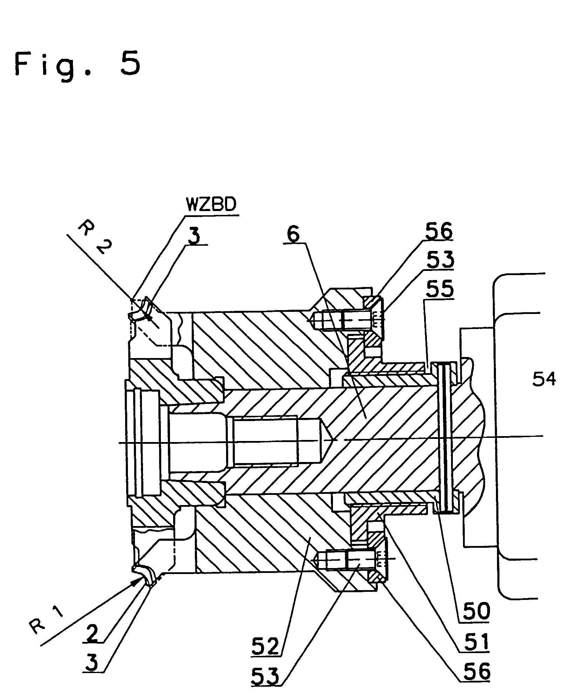

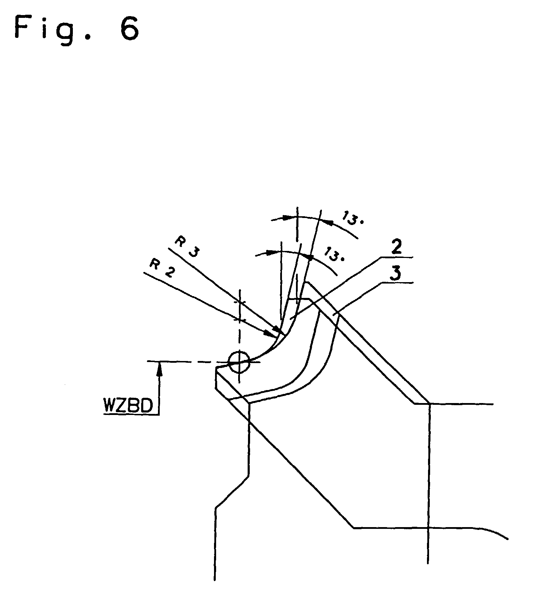

Eine zweite Ausführungsform einer erfindungsgemäßen Vorrichtung ist in den Fig. 5 und 6 dargestellt. Wie aus dem Längsschnitt der Fig. 5 ersichtlich ist, sind die zwei verschiedenen Fräser 1 und 3 jeweils mit schneiden 2, 4 mit unterschiedlichen Radien R₁ und R₂ versehen. Der Fräser 3 ist hier der feststehende Fräser und weist den größeren Radius R₂ auf. Der beweglich gelagerte Fräser 2 weist hier den kleineren Radius R₁ auf. Der Fräser 2 ist mit dem auf dem Aufnahmedorn 6 verschiebbar gehaltenen Werkzeughalter 52 integriert ausgebildet. Der Werkzeughalter 52 ist über Schrauben 53 mit einer Sechskantmutter 51 axial festgelegt verbunden. Die Sechskantmutter 51 ist über eine Scheibe 56 gegenüber dem Werkzeughalter 52 drehbar angeordnet. Eine Gewindehülse 50 ist auf dem Aufnahmedorn 6 drehfest angebracht und über ein Gewinde mit der Sechskantmutter 51 verbunden. Durch Festhalten der Sechskantmutter 51 bei sich drehender Motorwelle (Aufnahmedorn 6) ist der Spalt 55 zwischen der Gewindehülse 50 und der Sechskantmutter 51 veränderbar. Entsprechend ist der Fräser 1 von einer Ruhestellung in eine Arbeitsstellung verschiebbar. Die Verstellung erfolgt hierbei über den Fräsermotor 54 bei festgehaltener Sechskantmutter 51.

Schließlich ist aus der Fig. 6 eine vergrößerte Teilansicht der verschiedenen Fräserschneiden der Fräser 1 und 3 dargestellt. Insbesondere ist hier der gemeinsame Werkzeugbasisdurchmesser WZBD erkenntlich. Bei der hier dargestellten Lageposition ist der Fräser 1 mit dem Radius R2 (2 mm) in seine Arbeitsstellung verschoben, so dass dessen Werkzeug-Basisdurchmesser WZBD sich mit dem Werkzeug-Basisdurchmesser WZBD des Fräsers 3 überdeckt, d.h. die gleiche Lageposition zur Tasteinrichtung einnimmt. In der Ruhestellung ist der Fräser 1 ausgerückt, so dass nur der Fräser 3 mit dem Radius R3 (3 mm) mit dem Werkstück 12 in Eingriff gelangt.

## Patentansprüche

1. Vorrichtung zum Bearbeiten von Kanten eines plattenförmigen Werkstücks, insbesondere einer aus Holz, holzähnlichen Werkstoffen oder Kunststoffen bestehenden Platte mit separater, an die Platte angeleimter Kante, mit
- einem ersten Spanwerkzeug (1), das einen Werkzeug-Basisdurchmesser (WZBD) aufweist,
- einer dem ersten Spanwerkzeug (10) zugeordneten Tasteinrichtung (10) zur Führung der Vorrichtung am Werkstück (12),
- zumindest einem weiteren Spanwerkzeug (3),
- das den gleichen Werkzeug-Basisdurchmesser besitzt wie das erste Spanwerkzeug (1), aber eine zum ersten Spanwerkzeug (10) unterschiedliche Spanbearbeitung bewirkt, und
- das gegenüber dem ersten Spanwerkzeug von einer Ruhestellung, in der es nicht mit dem Werkstück (12) in Eingriff steht, in eine Arbeitsstellung bewegbar ist, in der es mit dem Werkstück (12) in Eingriff gelangt und in der die beiden Spanwerkzeuge (1, 3) so zueinander angeordnet sind, dass die beiden Werkzeug-Basisdurchmesser (WZBD) zur Tasteinrichtung (10) die gleiche Lageposition einnehmen.

2. Vorrichtung nach Anspruch 1, **dadurch gekennzeichnet,** dass das erste Spanwerkzeug (1) und das zumindest eine weitere Spanwerkzeug (3) auf einem gemeinsamen Aufnahmedorn (6) sitzen.

3. Vorrichtung nach Anspruch 2, **dadurch gekennzeichnet,** dass das erste Spanwerkzeug (1) auf dem Aufnahmedorn (6) fest angeordnet ist und das zumindest eine weitere Spanwerkzeug (3) auf diesem Aufnahmedorn (6) bewegbar angeordnet ist.

4. Vorrichtung nach Anspruch 3, **dadurch gekennzeichnet,** dass das zumindest eine weitere Spanwerkzeug (3) über eine pneumatisch oder hydraulische Verstellung (16) längs des Aufnahmedorns (6) verschiebbar ist.

5. Vorrichtung nach Anspruch 3 oder 4, **dadurch gekennzeichnet,** dass das zumindest eine weitere Spanwerkzeug (3) mittels einer Kupplungsgabel (22) auf dem Aufnahmedorn (6) verschiebbar ist, wobei die Kupplungsgabel (22) beabstandet von der Längsachse des Aufnahmedorns (6) drehbar gelagert ist und mittels eines Verstellzylinders (16) verschwenkbar ist.

6. Vorrichtung nach Anspruch 3, **dadurch gekennzeichnet,** dass das zumindest eine weitere Spanwerkzeug (3) über eine Schraubverstellung längs des Aufnahmedorns (6) verschiebbar ist.

7. Vorrichtung nach einem der Ansprüche 2-5, **dadurch gekennzeichnet,** dass der Aufnahmedorn (6) in seinem Durchmesser veränderbar ist.

8. Vorrichtung nach Anspruch 6, **dadurch gekennzeichnet,** dass der Aufnahmedorn (6) innen hohl ist und über ein druckbeaufschlagbares Medium der Durchmesser des Aufnahmedorns (6) veränderbar ist.

9. Vorrichtung nach einem der vorhergehenden Ansprüche, **dadurch gekennzeichnet,** dass das erste Spanwerkzeug (1) aus einzelnen, auf einem Kreis beabstandet angeordneten Schneiden (2) besteht und das zumindest eine weitere Spanwerkzeug (3) ebenfalls aus einzelnen, auf einem Kreis beabstandeten Schneiden (4) besteht, die gegenüber den Schneiden des ersten Spanwerkzeugs derart versetzt sind, dass bei Bewegung des zweiten Spanwerkzeugs (3) in die Arbeitsstellung dessen Schneiden zwischen den Schneiden (2) des ersten Spanwerkzeugs (1) liegen.

10. Vorrichtung nach Anspruch 1, **dadurch gekennzeichnet,** dass die Tasteinrichtung eine Tastrolle (10) ist, die am vorderen Ende des Aufnahmedorns (6) drehbar gelagert ist.
